# EUROPEAN PATENT APPLICATION

(11) **EP 2 902 754 A1**
(43) Date of publication of application: **05.08.2015**
(21) Application number: 13842963.4
(22) Date of filing: 16.08.2013
(51) Int. Cl.: G01H 17/00

(54) **VIBRATION SENSOR UNIT**

(30) Priority: 27.09.2012 JP 2012215130
(71) Applicant: NEC Corporation, Tokyo 108-8001 (JP)
(72) Inventor: SASAKI Yasuhiro, Tokyo 108-8001 (JP); TAKAHASHI Masatake, Tokyo 108-8001 (JP); SHINODA Shigeki, Tokyo 108-8001 (JP); MATAGA Junichiro, Tokyo 108-8001 (JP)
(74) Representative: Vossius & Partner Patentanwälte Rechtsanwälte mbB
(86) International application number: PCT/JP2013/072004
(87) International publication number: WO 2014/050348

(57) **Abstract**

A vibration sensor unit (100) includes a metal casing (11), a vibration sensor (12) disposed in the casing (11), a battery (15), and a control unit (13). The control unit (13) applies power supplied from the battery (15) to the casing (11) to apply charges to the casing (11), and controls an amount of power applied to the casing (11).

## Description

### [Technical Field]

The present invention relates to a vibration sensor unit suitably used for detecting water leakage in waterworks, gas leakage from gas pipes, and leakage from various types of pipes at a chemical plant, and diagnosing degradation of a structure such as a building or a bridge.

### [Background Art]

Diagnostic techniques based on various sensors have been offered and put to practical use. For example, for the diagnosis of fluid leakage caused by degradation or destruction of piping such as a water pipe, a method for detecting vibration generated due to the fluid leakage and transmitted through the piping by the vibration sensor unit is generally employed (Patent Literatures 1 and 2: PTL 1 and PTL 2). The piping is buried underground or installed at a structure disposed at a high place. Thus, a method for installing the vibration sensor unit for a long period of time and performing inspection through wireless communication is much higher in efficiency than manual inspection.

Patent Literature 3 (PTL 3) describes a vibration detector that includes a vibration power generator, and describes that the vibration detector is operated by using power generated by the vibration power generator. Patent Literature 4 (PTL 4) describes a sensor node chip that includes an AC current generator for generating power according to external vibration, and a power storage circuit for storing charges generated by the AC current generator and supplying power to a sensor element signal detection circuit.

Patent Literature 5 (PTL 5) describes a sensor unit that includes a sensor in a sealed casing. Patent Literature 6 (PTL 6) describes a temperature detector that includes a highly corrosion resistant and electrically insulating surface-treated layer on an outer surface of a metal case.

As described in Patent Literature 7 (PTL 7), as a technology for preventing corrosion of a hull, there has been known a cathode anticorrosion method of a galvanic anode type or an external power supply type.

### [Citation List]

### [Patent Literature]

[PTL 1] Japanese Laid-open Patent Publication No. 6-34478
[PTL 2] Japanese Laid-open Patent Publication No. 8-166315
[PTL 3] Japanese Laid-open Patent Publication No. 2011-221002
[PTL 4] Japanese Laid-open Patent Publication No. 2011-059991
[PTL 5] Japanese Laid-open Patent Publication No. 2008-203267
[PTL 6] Japanese Laid-open Patent Publication No. 63-184030
[PTL 7] Japanese Laid-open Patent Publication No. 2011-88542

### [Summary of Invention]

### [Technical Problem]

The vibration sensor unit is preferably installed for a long period of time to inspect fluid leakage through the piping or degradation of the structure such as a building or a bridge. Therefore, the vibration sensor unit is expected to have environmental durability so as to be usable in the long-period installation.

In general, for the casing of the vibration sensor unit, a metallic material of high strength capable of easily retaining a shape against impact forces generated during outdoor work is used. However, foreign objects such as water drops due to rainfall, sand dusts, or blowing dusts stick to generate electrochemical action, thereby advancing elution of the material of the casing. As a result, incursion of the foreign objects into the casing advances due to formation of holes by the corrosion, and component failures occur to reduce the durability. Thus, there is a problem of unsuitability to the long-period installation.

The cathode anticorrosion method of the galvanic anode type is configured to prevent metal corrosion by fitting another electrochemically baser metal as a sacrificial electrode and eluting the sacrificial electrode. However, components eluted from the sacrificial electrode cause electric failures such as short-circuiting of an electric contact or the like. It is therefore difficult to apply the cathode anticorrosion method of the galvanic anode type to the vibration sensor unit.

The cathode method of the external power supply type is a technology for preventing corrosion by forcibly supplying current to the metal to keep a potential thereof. However, the operation needs great electric power. For the vibration sensor unit required to operate with low power so as to be installed for the long period of time, application of the cathode method of the external power supply type needing great power is difficult.

It is an object of the present invention to provide a vibration sensor unit installable and operable for a long period of time.

### [Solution to Problem]

The present invention provides a vibration sensor unit that includes a metal casing, a vibration sensor disposed in the casing, a battery, a control unit, and an antenna for wireless communication, wherein the control unit applies power supplied from the battery to the casing to apply charges to the casing, and controls an amount of power applied to the casing.

### [Advantageous Effects of Invention]

The present invention can provide a vibration sensor unit installable and operable for a long period of time.

### [Brief Description of Drawings]

The above and other objects, features and advantages will become more apparent from the following description of the preferred exemplary embodiments in conjunction with the following accompanying drawings.

[Fig. 1] Fig. 1 is a block diagram illustrating a configuration of a vibration sensor unit according to a first exemplary embodiment.
[Fig. 2] Fig. 2 is a perspective view schematically illustrating the configuration of the vibration sensor unit according to the first exemplary embodiment.
[Fig. 3] Fig. 3 illustrates time charts each illustrating an example of an operation of the vibration sensor unit according to the first exemplary embodiment.
[Fig. 4] Fig. 4 is a block diagram illustrating a configuration of a vibration sensor unit according to a second exemplary embodiment.
[Fig. 5] Fig. 5 is a perspective view schematically illustrating the configuration of the vibration sensor unit according to the second exemplary embodiment.
[Fig. 6] Fig. 6 is a block diagram illustrating a configuration of a vibration sensor unit according to a third exemplary embodiment.
[Fig. 7] Fig. 7 is a perspective view schematically illustrating the configuration of the vibration sensor unit according to the third exemplary embodiment.
[Fig. 8] Fig. 8 illustrates time charts each illustrating an example of an operation of the vibration sensor unit according to the third exemplary embodiment.
[Fig. 9] Fig. 9 is a block diagram illustrating a configuration of a vibration sensor unit according to a fourth exemplary embodiment.
[Fig. 10] Fig. 10 is a block diagram illustrating a configuration of a vibration sensor unit according to a fifth exemplary embodiment.
[Fig. 11] Fig. 11 is a perspective view schematically illustrating the configuration of the vibration sensor unit according to the fifth exemplary embodiment.
[Fig. 12] Fig. 12 is a sectional view schematically illustrating the configuration of the vibration sensor unit according to the fifth exemplary embodiment.
[Fig. 13] Fig. 13 is a perspective view for schematically illustrating methods for evaluating durability performance of vibration sensor units according to Examples and Comparative Example.
[Fig. 14] Fig. 14 is a table illustrating durability performance of the vibration sensor units according to the Examples and the Comparative Example.
[Fig. 15] Fig. 15 is a block diagram illustrating a configuration of the vibration sensor unit according to the Comparative Example.

### [Description of Embodiments]

Hereinafter, the exemplary embodiments of the present invention will be described with reference to the drawings. Throughout the drawings, the same or similar components are denoted by the same reference signs, and description thereof will be omitted accordingly.

### (First Exemplary Embodiment)

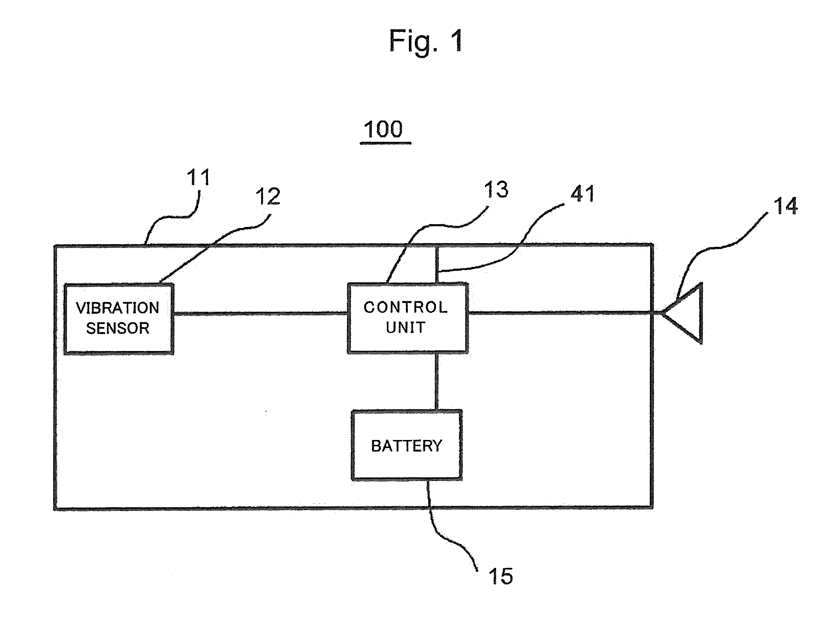

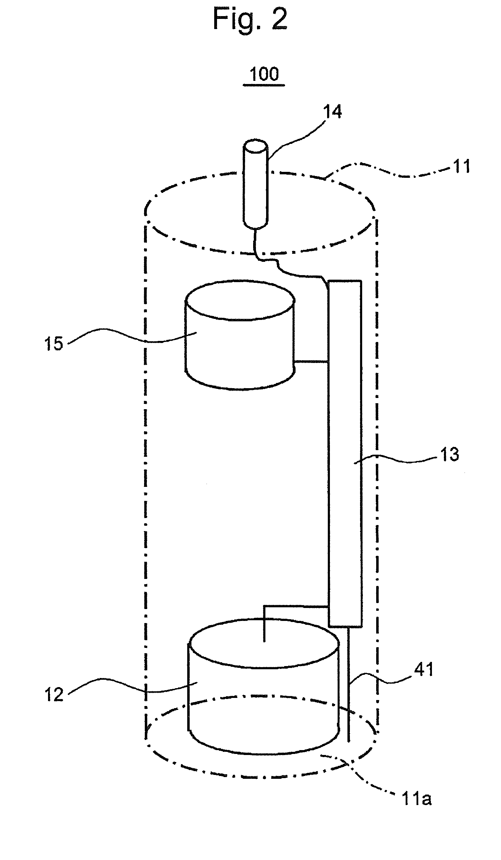

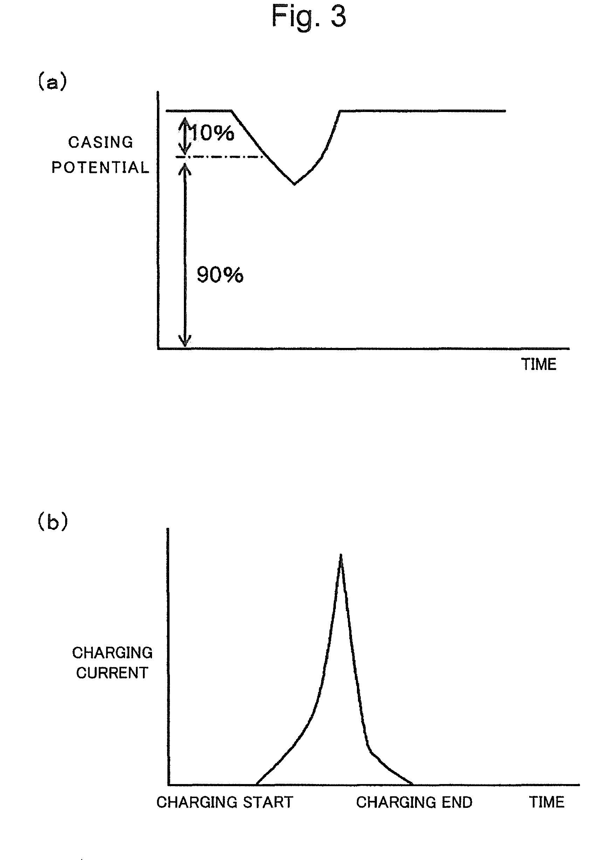

Fig. 1 is a block diagram illustrating a configuration of a vibration sensor unit 100 according to a first exemplary embodiment. Fig. 2 is a perspective view schematically illustrating the configuration of the vibration sensor unit 100. In Fig. 2, a casing 11 is indicated by a chain line. Fig. 3 illustrates time charts each illustrating an example of an operation of the vibration sensor unit 100.

The vibration sensor unit 100 according to the exemplary embodiment includes the metal casing 11, a vibration sensor 12, a battery 15 serving as a power source, and a control unit 13. The control unit 13 applies power supplied from the battery 15 to the casing 11 to apply charges to the casing, and controls the amount of power applied to the casing 11. The vibration sensor 12, the battery 15, and the control unit 13 are arranged in the casing 11. Hereinafter, detailed description will be made.

The casing 11 is sealed to insulate an internal space of the casing 11 from external air. In other words, the internal space of the casing 11 is a sealed space.

The vibration sensor unit 100 further includes an antenna 14 for performing wireless communication with an external device of the vibration sensor unit 100. For example, the antenna 14 is externally fitted to the casing 11. Note, however, that the antenna 14 is electrically connected to the control unit 13 through a wall surface of the casing 11, and the wireless communication is performed with the outside under control of the control unit 13.

The vibration sensor 12 detects vibration when the vibration sensor unit 100 vibrates. A detection result of the vibration sensor 12 is input to the control unit 13. The control unit 13 transmits the detection result by the vibration sensor 12 to the external device via the antenna 14.

Specifically, the vibration sensor 12 includes a piezoelectric element, converts mechanical vibration of the vibration sensor unit 100 into an AC electric signal, and outputs the electric signal to the control unit 13.

The control unit 13 determines a size of the vibration of the vibration sensor unit 100 based on the electric signal input from the vibration sensor 12, and transmits the determination result to the external device via the antenna 14.

The casing 11 is formed into, for example, a cylindrical shape. For example, a circular bottom part 11a (Fig. 2) of the casing 11 is fixed to an installation object such as a water pipe. The vibration sensor unit 100 includes, for example, a fixing unit (permanent magnet or the like) not illustrated for attracting and fixing the bottom part 11a to the water pipe or the like by a strong magnetic force.

The vibration sensor 12 is disposed, for example, on the bottom part 11a in the casing 11, and capable of detecting minute vibration transmitted through the water pipe or the like to the vibration sensor unit 100.

The power from the battery 15 is consumed by operating the vibration sensor 12, the control unit 13, and the antenna 14, and by supplying charges to the casing 11 (described below).

The vibration sensor unit 100 further includes a wiring line 41 for electrically interconnecting the control unit 13 and the casing 11.

The control unit 13 applies charges stored in the battery 15 to the casing 11 via the wiring line 41. Accordingly, corrosion of the metal casing 11 caused by an electrochemical action can be suppressed. As a result, the vibration sensor unit 100 can be installed for a long period of time.

Power supplying from the control unit 13 to the casing 11 is preferably performed for the bottom part 11 a which is disposed close to the installation object such as the water pipe and in which electrochemical corrosion easily occurs. In other words, one end of the wiring line 41 is preferably connected to a portion contacted with the installation object such as the water pipe.

The control unit 13 does not constantly apply charges to the casing 11 but intermittently. Accordingly, a long life of the battery 15 can be achieved, and the vibration sensor unit 100 can be operated for a long period of time. There is no particular limitation on frequency of applying charges to the casing 11.

The control unit 13 applies charges to the casing 11 at regular time intervals by control using, for example, a timer.

Alternatively, the control unit 13 may constantly or periodically monitor (keep watch on) a potential of the casing 11, and apply charges to the casing 11 when the potential drops below a lower limit of a predetermined range. In other words, in this case, the control unit 13 includes a potential detection unit configured to detect the potential of the casing 11, and applies power to the casing 11 so that the potential of the casing 11 can be maintained within a fixed range according to a detection result by the potential detection unit. In this case, for example, the potential detection unit detects the potential of the casing 11 input to the control unit 13 through the wiring line 41. Fig, 3 illustrates time charts each illustrating an example of an operation in this case. In Fig. 3(a), a horizontal axis indicates time, while a vertical axis indicates a potential of the casing 11. In Fig. 3(b), a horizontal axis indicates time, while a vertical axis indicates magnitude of current (charging current) supplied to the casing 11. For example, as illustrated in Fig. 3 (a) and (b), when the potential of the casing 11 drops below 90% of a predetermined potential, the control unit 13 starts application of charges to the casing 11 (charging start). Then, when the potential of the casing 11 is recovered to the predetermined potential, the control unit 13 ends the application of charges to the casing 11 (charging end).

Through any one of these operations, the potential of the casing 11 can be always maintained within a certain range. As a result, corrosion of the metal casing 11 caused by the electrochemical action can be always suppressed.

Thus, according to the first exemplary embodiment, the control unit 13 applies the power supplied from the battery 15 to the casing 11 to apply charges to the casing 11, and controls the amount of power applied to the casing 11. As a result, by appropriately maintaining the potential of the casing 11, corrosion of the casing 11 caused by the electrochemical action can be suppressed. In other words, by suppressing elution of the metallic material of the casing 11 caused by the electrochemical action, the corrosion of the casing 11 can be suppressed. Thus, the vibration sensor unit 100 can be installed and operated for a long period of time.

Since the control unit 13 intermittently applies charges to the casing 11, the life of the battery 15 can be prolonged, and the vibration sensor unit 100 can be installed and operated for a long period of time.

When the control unit 13 applies charges to the casing 11 at regular time intervals, the potential of the casing 11 can be surely maintained appropriately by simple control.

The vibration sensor unit 100 may include the potential detection unit configured to detect the potential of the casing 11, and apply power to the casing 11 so that the potential of the casing 11 can be maintained within the fixed range according to the detection result by the potential detection unit. In this case, since the charges can be applied to the casing 11 at more appropriate timing, the potential of the casing 11 can be maintained more appropriately.

### (Second Exemplary Embodiment)

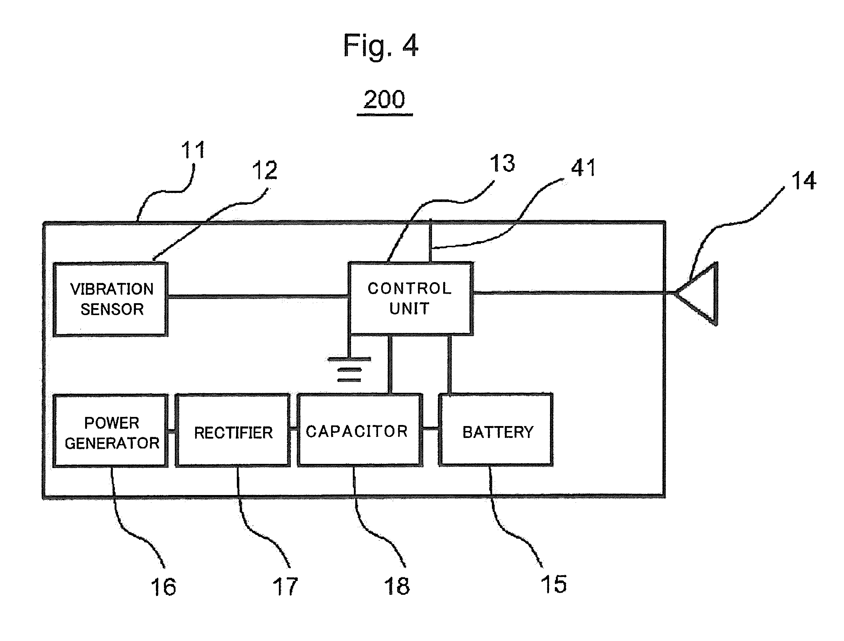

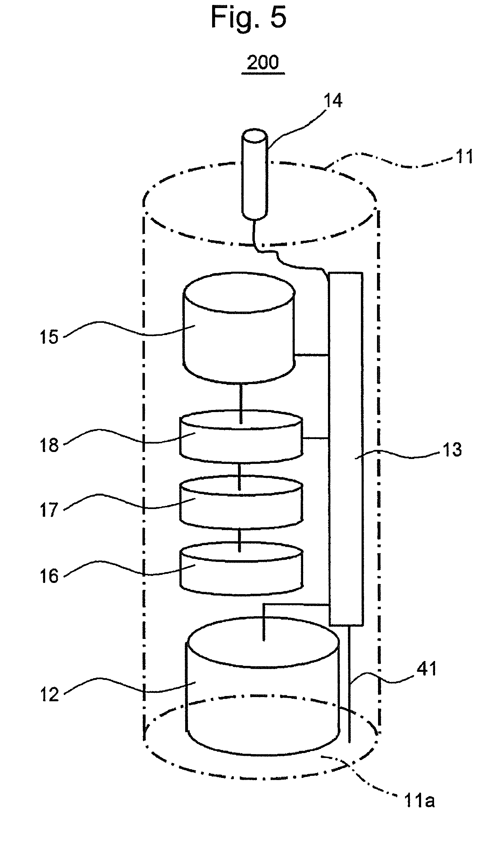

Fig. 4 is a block diagram illustrating a configuration of a vibration sensor unit 200 according to a second exemplary embodiment. Fig. 5 is a perspective view schematically illustrating the configuration of the vibration sensor unit 200. In Fig. 5, a casing 11 is indicated by a chain line.

The vibration sensor unit 200 according to the second exemplary embodiment includes, in addition to the components of the vibration sensor unit 100 according to the first exemplary embodiment (Figs. 1 and 2), a power generator (power generation unit) 16 configured to convert vibration into power, a rectifier 17, and a capacitor (power storage unit) 18. A control unit 13 uses power generated by the power generator 16 for applying charges to the casing 11, or operating the control unit 13 and an antenna 14.

According to the exemplary embodiment, the battery 15 is a dischargeable and chargeable secondary battery.

The power generator 16 converts, for example, mechanical vibration of the vibration sensor unit 200 into AC electric energy to output charges. In other words, the power generator 16 converts the mechanical vibration (vibration) of the vibration sensor unit 200 into AC power to output the power. The power generator 16 can be configured by, for example, a piezoelectric element similar to that of the vibration sensor 12. The amount of power generated by the power generator 16 depends on a mechanical vibration amount of the vibration sensor unit 200, and thus fluctuates with time (not constant).

The rectifier 17 rectifies charges (power) output from the power generator 16 to convert (rectify) the charges into DC charges, and outputs the DC charges (power).

The capacitor 18 temporarily stores the charges (power) output from the rectifier 17. Then, the charges (power) stored in the capacitor 18 are charged to the battery 15.

Since a charging speed of the battery 15 is slow, direct storage of the charges output from the rectifier 17 in the battery 15 is not efficient. Thus, by first storing the charges output from the rectifier 17 in the capacitor 18 and slowly charging the charges from the capacitor 18 to the battery 15, the charges can be efficiently stored in the battery 15. In other words, a speed of storing the charges from the capacitor 18 to the battery 15 is set slower than that from the rectifier 17 to the capacitor 18.

The charges stored in the capacitor 18 may be supplied to the battery 15 via the control unit 13 to be stored in the battery 15, or directly supplied from the capacitor 18 to the battery 15 to be stored in the battery 15.

The charges stored in the capacitor 18 may be directly consumed by the control unit 13 and the antenna 14 without being stored in the battery 15. In other words, the power generated by the power generator 16 may be supplied to the control unit 13 via the capacitor 18.

Thus, according to the second exemplary embodiment, the vibration sensor unit 200 includes the power generator 16 configured to convert the vibration into power, and the power generated by the power generator 16 is used for applying charges to the casing 11 or operating the control unit 13 and the antenna 14. Thus, the life of the battery 15 can be prolonged more.

In general, as the vibration sensor of the vibration sensor unit, a piezoelectric element capable of highly accurately detecting minute vibration (high in detection accuracy) is used. The high detection accuracy means high efficiency of converting vibration into power (hereinafter, simply conversion efficiency). Thus, by using a piezoelectric element similar to that of the vibration sensor 12 for the power generator 16, a sufficient amount of power can be provided through power generation thereof.

The vibration sensor unit 200 includes the capacitor 18 serving as the power storage unit configured to store the power generated by the power generator 16, and the power is supplied to the control unit 13 via the capacitor 18. By using the capacitor 18, a loss of the power generated by the power generator 16 is suppressed, and the power can be effectively used by reducing wastes as much as possible.

The vibration sensor unit 200 supplies the power generated by the power generator 16 to the battery 15 to be charged. Thus, extra power of the power continuously generated by the power generator 16 can be stored in the battery 15 to be used.

The second exemplary embodiment has been described by way of example of using the piezoelectric-type power generator 16. However, the power generator 16 may be another type. For example, a power generator 16 of a vibration electric conversion type using magnetism may be used.

### (Third Exemplary Embodiment)

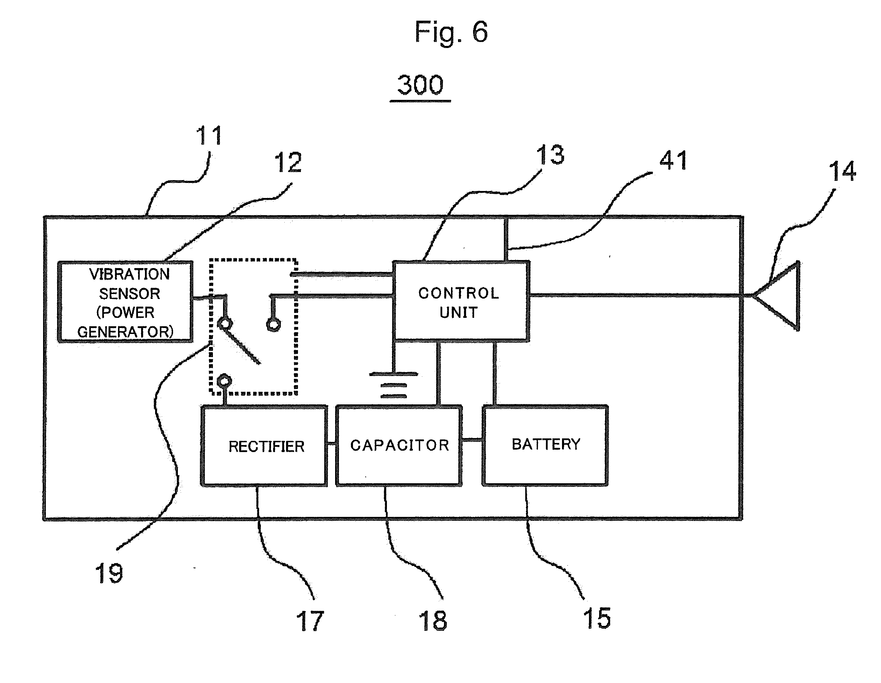

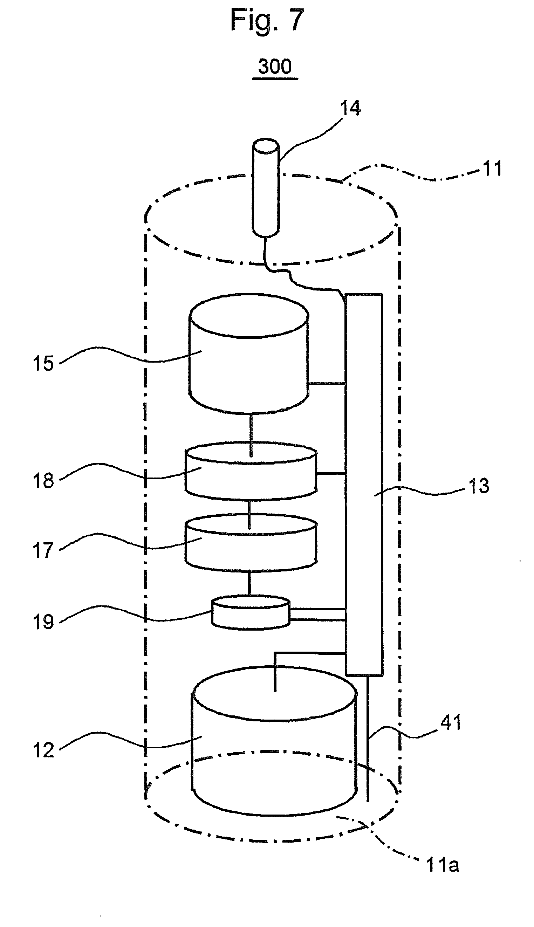

Fig. 6 is a block diagram illustrating a configuration of a vibration sensor unit 300 according to a third exemplary embodiment. Fig. 7 is a perspective view schematically illustrating the configuration of the vibration sensor unit 300 according to the third exemplary embodiment. In Fig. 7, a casing 11 is indicated by a chain line.

According to the exemplary embodiment, a vibration sensor 12 also functions as a power generator configured to convert vibration into power. In other words, the same vibration sensor 12 functions as the vibration sensor 12 and the power generator 16 in the second exemplary embodiment (Figs. 4 and 5).

According to the exemplary embodiment, a battery 15 is a dischargeable and chargeable secondary battery.

The vibration sensor unit 300 according to the exemplary embodiment includes, in addition to the components of the vibration sensor unit 100 according to the first exemplary embodiment (Figs. 1 and 2), a rectifier 17, a capacitor 18, and a change-over switch 19.

The change-over switch 19 operates under control of a control unit 13. The change-over switch 19 performs selective switching between a state of inputting an output of the vibration sensor 12 to the control unit 13 and a state of inputting the output of the vibration sensor 12 to the capacitor 18 via the rectifier 17. The control unit 13 controls the change-over switch 19 so as to input the output from the vibration sensor 12 to the control unit 13 when a vibration detection operation is performed, and controls the change-over switch 19 so as to input the output from the vibration sensor 12 to the capacitor 18 via the rectifier 17 when otherwise.

The vibration sensor 12 converts mechanical vibration of the vibration sensor unit 300 into an AC electric signal, and outputs the electric signal. In a state where the vibration sensor 12 is connected with the control unit 13 by the change-over switch 19, the electric signal is input to the control unit 13 via the change-over switch 19 to be used for determining a size of vibration of the vibration sensor unit 300. The electric signal is AC electric energy (power) itself. In a state where the vibration sensor 12 is connected with the rectifier 17 by the change-over switch 19, the electric signal, in other words, the AC power, is rectified into DC power by the rectifier 17 as in the case of the second exemplary embodiment, and output to the capacitor 18.

The capacitor 18 temporarily stores the power (charges) output from the rectifier 17 as in the case of the second exemplary embodiment. In other words, the capacitor 18 stores the output of the vibration sensor 12 as power.

As in the case of the second exemplary embodiment, the charges stored in the capacitor 18 may be supplied to the battery 15 via the control unit 13 to be stored in the battery 15, or directly supplied from the capacitor 18 to the battery 15 to be stored in the battery 15. The charges stored in the capacitor 18 may be consumed by the control unit 13 and the antenna 14 without being stored in the battery 15.

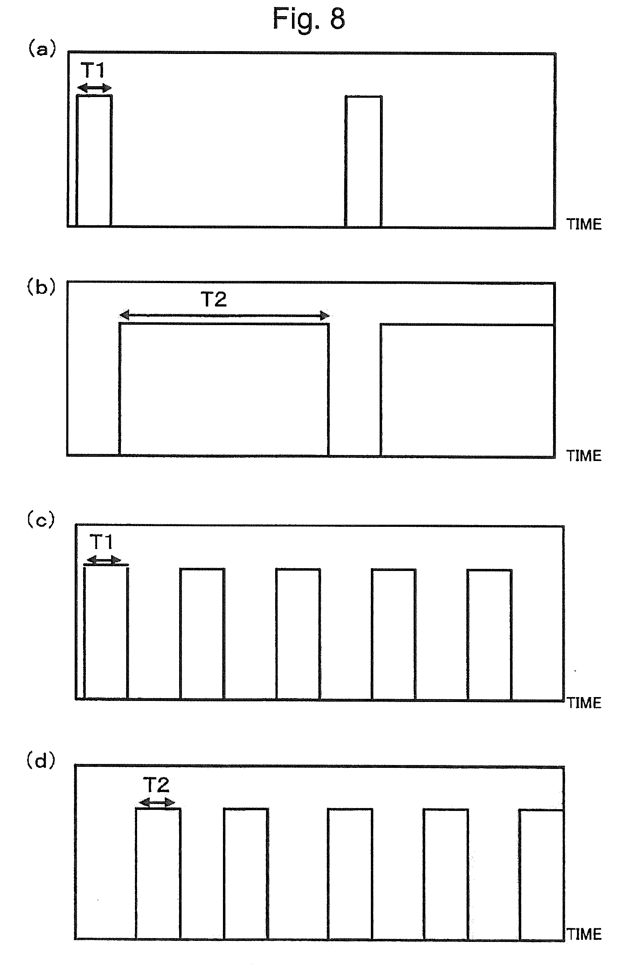

Fig, 8 illustrates time charts each illustrating an example of an operation of the vibration sensor unit 300 according to the third exemplary embodiment. Fig. 8(a) illustrates a vibration detection operation when no water leakage is detected, and Fig. 8(b) illustrates a power generation operation when no water leakage is detected. Fig. 8(c) illustrates a vibration detection operation when water leakage is detected, and Fig. 8(d) illustrates a power generation operation when water leakage is detected.

When no water leakage is detected, as illustrated in Fig. 8(a), a vibration detection operation is intermittently carried out during a period T1. In other words, a state where an output from the vibration sensor 12 is input to the control unit 13 is set. As illustrated in Fig. 8(b), a power generation operation is carried out during a period T2 other than the period T1.

When no water leakage is detected, a length of the period T1 is, for example, about 10% or less than a length of time obtained by adding the periods T1 and T2, and a length of the period T2 is about 90% or more than the length of the time obtained by adding the periods T1 and T2. As an example, the period T1 of 5 seconds and the period T2 of 50 seconds may be alternately switched, for example.

On the other hand, when water leakage is detected, as illustrated in Fig. 8 (c) and (d), periods T1 and T2 are set equal to each other in length, and the periods T1 and T2 are alternately repeated. As an example, the period T1 of 5 seconds and the period T2 of 5 seconds may be alternately switched, for example.

Thus, according to the third exemplary embodiment, since the vibration sensor 12 also functions as the power generator, the number of devices included in the vibration sensor unit 300 can be reduced more than the second exemplary embodiment, and the vibration sensor unit 300 can be miniaturized more than the second exemplary embodiment.

The vibration sensor unit 300 includes the capacitor 18 configured to store the output of the vibration sensor 12 as the power, and the change-over switch 19 configured to perform switching between the state of inputting the output of the vibration sensor 12 to the control unit 13 and the state of inputting the output of the vibration sensor 12 to the capacitor 18. As a result, switching can be performed between a state where the vibration sensor 12 functions as the power generator and a state where the vibration sensor 12 executes its original vibration detection operation.

### (Fourth Exemplary Embodiment)

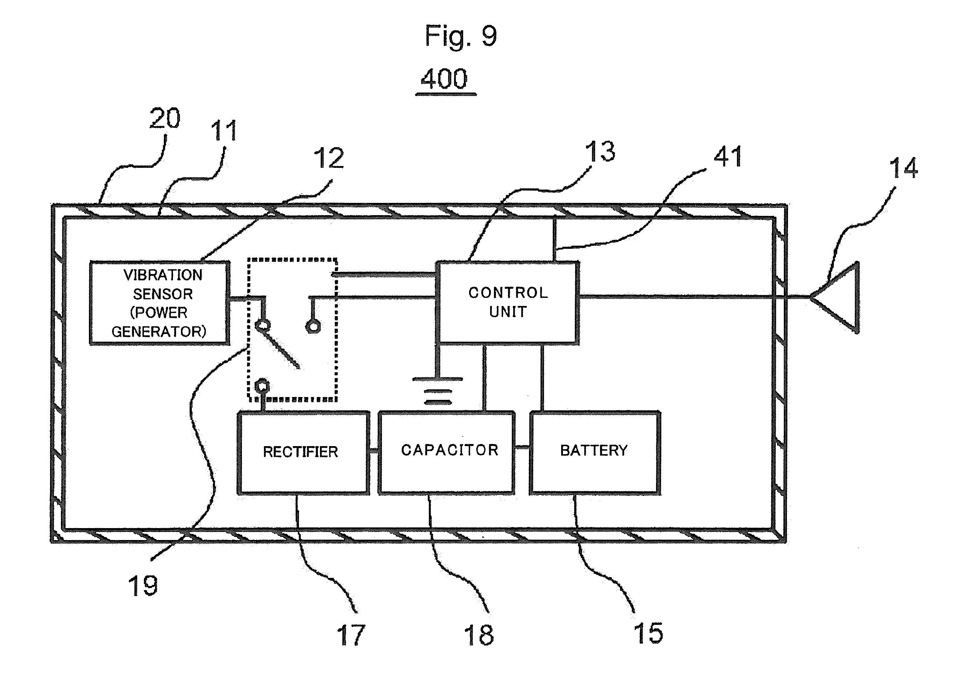

Fig. 9 is a block diagram illustrating a configuration of a vibration sensor unit 400 according to a fourth exemplary embodiment.

When the vibration sensor unit 300 is directly installed at an installation object such as a water pipe made of a conductive material such as a metallic material, electric short-circuiting occurs between the casing 11 and the installation object. Thus, the charges supplied to the metal casing 11 leak to the installation object to quickly disappear. As a result, much power is consumed due to replenishment of the casing 11 with charges.

Therefore, the vibration sensor unit 400 according to the exemplary embodiment includes, in addition to the components of the vibration sensor unit 300 of the third exemplary embodiment (Figs. 6 and 7), an insulating film (insulator) 20 formed to cover an outer surface of the casing 11.

Since the vibration sensor unit 400 includes the insulating film 20, insulation is achieved between the casing 11 and the installation object made of the conductive material. Accordingly, the insulating film 20 suppresses leakage of charges supplied to the casing 11 to provide an effect of reducing power consumption.

As a material of the insulating film 20, a fluorine resin material such as PTFE (polytetrafluoroethylene) is preferable. However, other insulating materials (resin or the like) may be used.

According to the fourth exemplary embodiment, the vibration sensor unit 400 further includes the insulating film 20 formed to cover the outer surface of the casing 11. Thus, leakage of charges from the casing 11 to the outside can be suppressed, and corrosion of the casing 11 can be suppressed while reducing power consumption of the vibration sensor unit 400.

The fourth exemplary embodiment has been described by way of example where the insulating film 20 is added to the configuration of the third exemplary embodiment. However, the insulating film 20 may be added to the configuration of the first or second exemplary embodiment.

### (Fifth Exemplary Embodiment)

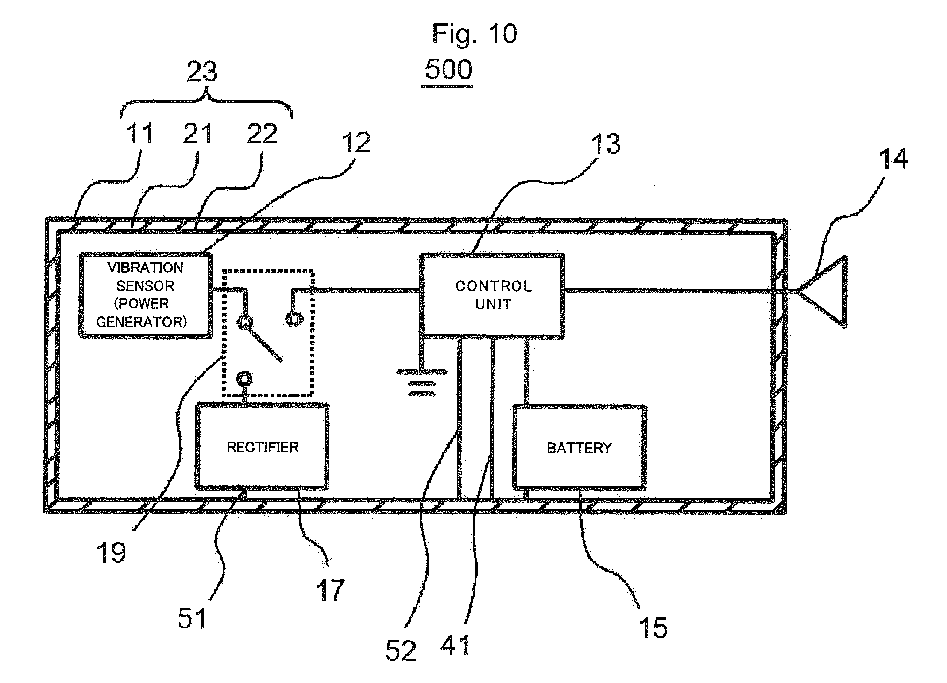

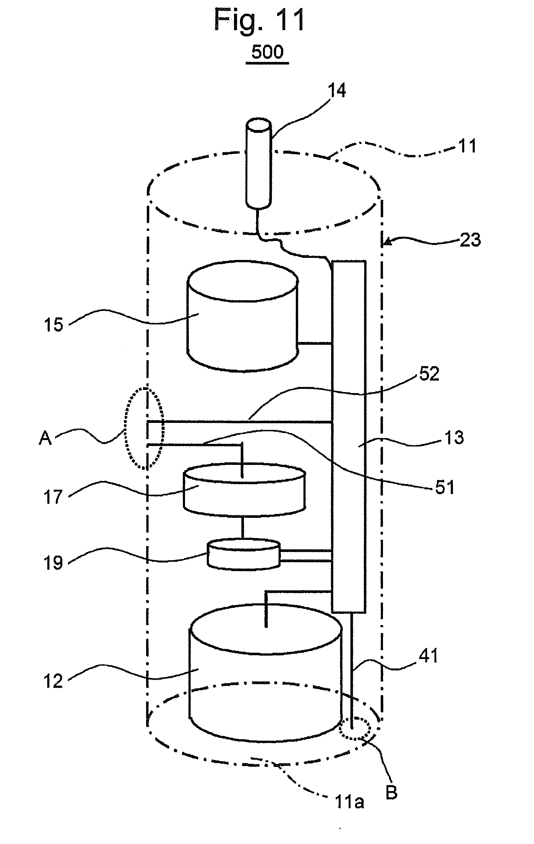

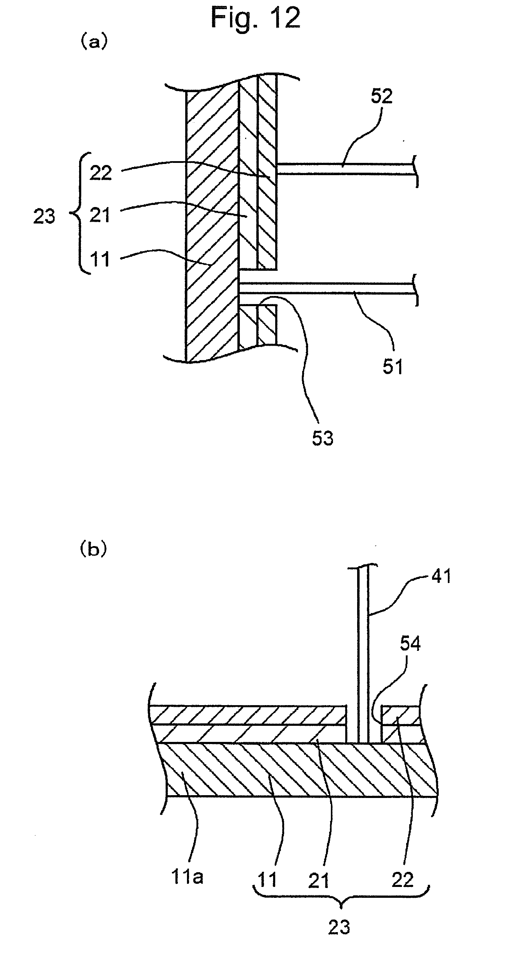

Fig. 10 is a block diagram illustrating a configuration of a vibration sensor unit 500 according to a fifth exemplary embodiment. Fig. 11 is a perspective view schematically illustrating the configuration of the vibration sensor unit 500. In Fig. 11, a casing 11 is indicated by a chain line. Fig. 12 illustrates sectional views each schematically illustrating the configuration of the casing 11 of the vibration sensor unit 500. Fig. 12(a) illustrates a portion A illustrated in Fig. 11. Fig. 12(b) illustrates a portion B illustrated in Fig. 11.

The vibration sensor unit 500 according to the exemplary embodiment does not include the capacitor 18 among the components of the vibration sensor unit 300 of the third exemplary embodiment (Figs. 6 and 7).

The vibration sensor unit 500 includes a dielectric layer (dielectric member) 21 and a metal layer (metallic material) 22 in addition to the components of the vibration sensor unit 300 according to the third exemplary embodiment.

The dielectric layer 21 is formed in an inner surface of the casing 11. The metal layer 22 is formed on the dielectric layer 21, and the dielectric layer 21 is sandwiched between the metal layer 22 and the casing 11. According to the exemplary embodiment, the metal casing 11, the dielectric layer 21, and the metal layer 22 constitute a capacitor 23. In other words, the vibration sensor unit 500 includes a power storage unit of a three-layer structure.

As a material of the dielectric layer 21, a fluorine resin material such as PTFE or other insulating materials (resin or the like) can be used.

As a material of the metal layer 22, stainless steel or aluminum (aluminum foil or the like) can be used.

According to the exemplary embodiment, DC charges (power) output from a rectifier 17 are input to the casing 11 via a wiring line 51, and stored in the casing 11 constituting the capacitor 23. As illustrated in Fig. 12(a), in the metal layer 22 and the dielectric layer 21, an opening 53 is formed through the metal layer 22 and the dielectric layer 21. The wiring line 51 is electrically connected to the casing 11 via the opening 53. The metal layer 22 constituting the capacitor 23 and the control unit 13 are electrically connected to each other via a wiring line 52. Charges (power) are supplied from the metal layer 22 (in other words, from the capacitor 23) to the control unit 13 via the wiring line 52.

The power supplied from the capacitor 23 to the control unit 13 is used for applying charges to the casing 11 or operating the control unit 13 and an antenna 14.

As illustrated in Fig. 12(b), according to the exemplary embodiment, a wiring line 41 is electrically connected to the casing 11 via an opening 54 formed through the metal layer 22 and the dielectric layer 21. Thus, as in the case of each of the abovementioned exemplary embodiments, the control unit 13 can apply charges to the casing 11 via the wiring line 41.

Thus, according to the fifth exemplary embodiment, since the casing 11 constitutes a part of the capacitor 23, the vibration sensor unit 500 may not need to include another capacitor 18.

The fifth exemplary embodiment has been described by way of example where the dielectric layer 21 and the metal layer 22 are added to the configuration of the third exemplary embodiment and the capacitor 18 is removed from the configuration. However, a configuration where the dielectric layer 21 and the metal layer 22 are added to the configuration of the second or fourth exemplary embodiment and the capacitor 18 is removed from the configuration may be employed. Especially, in the fifth exemplary embodiment, as in the case of the fourth exemplary embodiment, an insulating film 20 formed to cover an outer surface of the casing 11 is preferably provided.

The fifth exemplary embodiment has been described by way of example where the dielectric layer 21 is formed in the inner surface of the casing 11. However, the dielectric layer 21 may be formed in an outside face (outer surface) of the casing 11, and the metal layer 22 may be further formed thereon.

### (Example 1)

As Example 1, a vibration sensor unit 100 configured as illustrated in Figs. 1 and 2 was made. A casing 11 of a cylindrical shape having an outer diameter of 20 mm and a height of 40 mm was made by using a stainless steel material having a thickness of 2 mm. As a vibration sensor 12, a piezoelectric element having an outer diameter of 15 mm and a thickness of 5 mm and using piezoelectric ceramics was used, and the vibration sensor 12 was installed on a bottom part 11a of the casing 11. Data (detection result) acquired from the vibration sensor 12 was processed, and transmitted to the outside through an antenna 14. A control unit 13 configured to control charges by power supply from a battery 15 and apply a fixed potential to the casing 11 via a wiring line 41 was installed inside the casing 11. A potential of 200 mV was applied to the casing 11 compared with a case before application of charges.

### (Comparative Example)

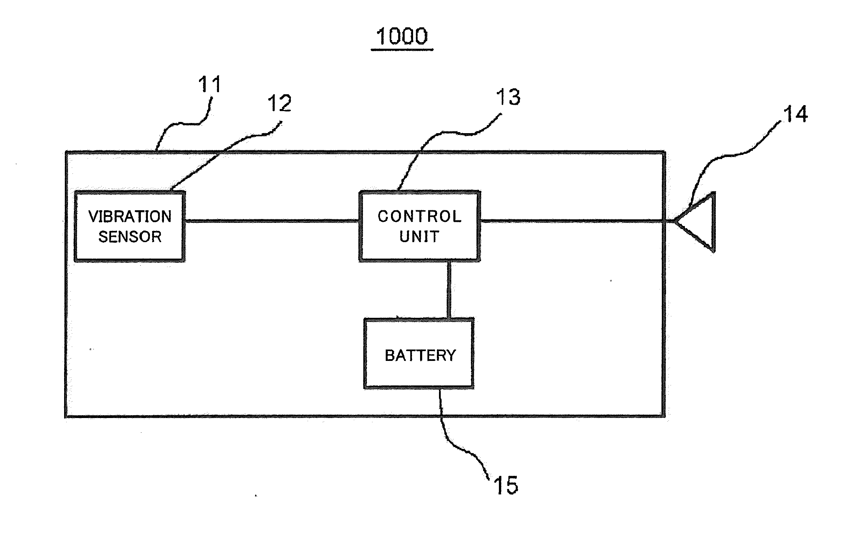

For comparison, a vibration sensor unit 1000 configured as illustrated in Fig. 15 was made. The vibration sensor unit 1000 is different from the vibration sensor unit 100 in that no wiring line 41 is provided nor any charges are applied from a control unit 13 to a casing 11. Others are configured similar to those of the vibration sensor unit 100. Data (detection result) acquired from the vibration sensor 12 was processed, and transmitted to the outside through an antenna 14.

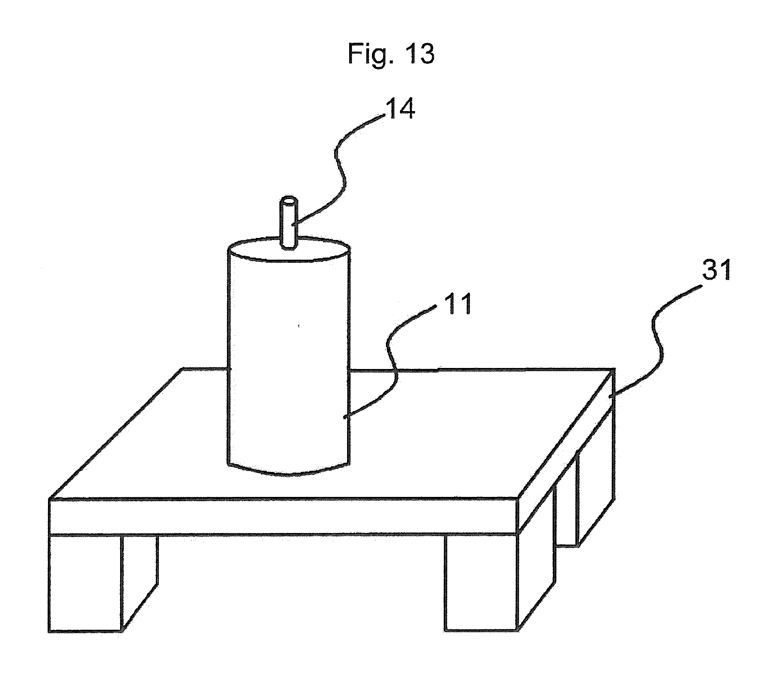

Fig. 13 is a perspective view schematically illustrating a method for evaluating durability performance of a vibration sensor unit according to each of Examples and Comparative Example. Salt water was sprayed to each of the vibration sensor units 100 and 1000 of the Example 1 and the Comparative Example to accelerate corrosion of the casing 11, and installed on a cast-iron support base 31 (Fig. 13) imitating a water pipe or the like. Then, the vibration sensor units 100 and 1000 were operated at intervals of 5 seconds while vibration of a frequency of 1 kHz and a force of 1N was applied to the support base 31, vibration data was transmitted to the outside by a radio wave generated from the antenna 14, and the data was received by an external receiver. Operating the vibration sensor units 100 and 1000 means executing data processing and external transmission of the detection result by the vibration sensor 12. Operating the vibration sensor units 100 and 1000 at the intervals of 5 seconds means alternately switching between a state of executing an operation for 5 seconds and a state of stopping an operation for 5 seconds.

### (Evaluation of Durability Performance)

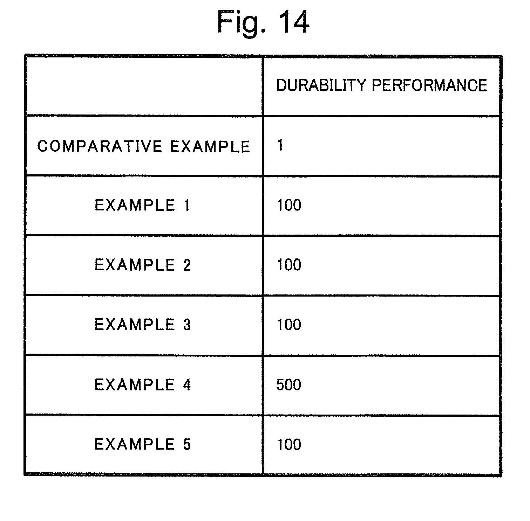

Time when a function stops for the vibration sensor units 100 and 1000, in other words, time until a stop of data transmission from the antenna 14 was set as durability time. A value acquired by dividing durability time of the vibration sensor unit 100 of the Example 1 by that of the vibration sensor unit 1000 of the Comparative Example was defined as durability performance, and comparison was made. Fig. 14 illustrates the result.

As illustrated in Fig. 14, the durability performance of the vibration sensor unit 100 of the Example 1 was higher by 100 times than that of the vibration sensor unit 1000 of the Comparative Example. Thus, according to the Example 1, the durability performance of the vibration sensor unit 100 was improved greatly compared with that of the Comparative Example.

Power consumed for preventing corrosion of the vibration sensor unit 100 of the Example 1 was 1 mW, which was extremely small power consumption. The power consumption was evaluated by measuring power consumption until the battery 15 was used up after the evaluation of the durability performance, and calculating a difference between the power consumption and a rated power amount of the battery 15.

### (Example 2)

As Example 2, a vibration sensor unit 200 configured as illustrated in Figs. 4 and 5 was made. The vibration sensor unit 200 of the Example 2 includes, in addition to the components of the vibration sensor unit 100 of the Example 1, a power generator 16 of a piezoelectric type, a rectifier 17, and a capacitor 18 serving as a power storage unit in a casing 11.

### (Evaluation of Durability Performance)

By the same method as that of the Example 1, durability performance of the vibration sensor unit 200 according to the Example 2 was evaluated. Fig. 14 illustrates a result.

As illustrated in Fig. 14, the durability performance of the vibration sensor unit 200 of the Example 2 was higher by 100 times than that of the vibration sensor unit 1000 of the Comparative Example. Thus, according to the Example 2, the durability performance of the vibration sensor unit 200 was improved greatly compared with that of the Comparative Example.

Power consumed for preventing corrosion of the vibration sensor unit 200 of the Example 2 was 0 mW. This showed that the power generated by the power generator 16 was enough to operate the vibration sensor unit 200.

### (Example 3)

As Example 3, a vibration sensor unit 300 configured as illustrated in Figs. 6 and 7 was made. The vibration sensor unit 300 of the Example 3 includes, in addition to the components of the vibration sensor unit 100 of the Example 1, a rectifier 17, a capacitor18 serving as a power storage unit, and a change-over switch 19 in a casing 11. A battery 15 is a chargeable and dischargeable secondary battery, and a vibration sensor 12 also serves as a power generator. By switching the change-over switch 19 under control of a control unit 13, a state of operating the vibration sensor unit 300 and a state of performing a power generation operation were switched at an interval of 5 seconds as illustrated in Fig. 8 (c) and (d). When the power generation operation was performed, charges generated by the vibration sensor 12 were stored in the capacitor 18 via the rectifier 17, and the charges stored in the capacitor 18 were further stored in the battery 15.

### (Evaluation of Durability Performance)

By the same method as that of the Example 1, durability performance of the vibration sensor unit 300 according to the Example 3 was evaluated. Fig. 14 illustrates a result.

As illustrated in Fig. 14, the durability performance of the vibration sensor unit 300 of the Example 3 was higher by 100 times than that of the vibration sensor unit 1000 of the Comparative Example. Thus, according to the Example 3, the durability performance of the vibration sensor unit 300 was improved greatly compared with that of the Comparative Example.

Power consumed for preventing corrosion of the vibration sensor unit 300 of the Example 3 was 0 mW. This showed that the power generated by the vibration sensor 12 was enough to operate the vibration sensor unit 300.

### (Example 4)

As Example 4, a vibration sensor unit 400 configured as illustrated in Fig. 9 was made. The vibration sensor unit 400 of the Example 4 includes, in addition to the components of the vibration sensor unit 300 of the Example 3, an insulating film 20 formed to cover an outer surface of a casing 11. The insulating film 20 was a PTFE film having a thickness of 1 mm.

### (Evaluation of Durability Performance)

By the same method as that of the Example 1, durability performance of the vibration sensor unit 400 of the Example 4 was evaluated. Fig. 14 illustrates a result.

As illustrated in Fig. 14, the durability performance of the vibration sensor unit 400 of the Example 4 was higher by 500 times than that of the vibration sensor unit 1000 of the Comparative Example. Thus, according to the Example 4, the durability performance of the vibration sensor unit 400 was improved greatly compared with that of the Comparative Example. This shows that the presence of the insulating film 20 can satisfactorily suppress leakage of charges of the casing 11 to a support base 31 caused by contact of the casing 11 with the cast-iron support base 31.

Power consumed for preventing corrosion of the vibration sensor unit 400 of the Example 4 was 0 mW. This showed that the power generated by the vibration sensor 12 was enough to operate the vibration sensor unit 400.

In the Example 4, the PTFE insulating film 20 having the thickness of 1 mm was used to cover the casing 11. However, the insulating film 20 of the Example 4 may be made of other materials or have other thicknesses as long as it can provide insulation properties to the surface of the casing 11. The film thickness of the insulating film 20 may be set uniform on the entire outer surface of the casing 11, or partially thick. For example, a film thickness of the insulating film 20 of a portion (in other words, bottom part 11 a) contacted with an installation object such as a pipe in the casing 11 may be set larger than those of the insulating film 20 of other portions. This provides better insulation between the portion contacted with the installation object in the casing 11 and the installation object.

### (Example 5)

As Example 5, a vibration sensor unit 500 configured as illustrated in Figs. 10 to 12 was made. The vibration sensor unit 500 of the Example 5 includes, in addition to the components of the vibration sensor unit 300 of the Example 3, a dielectric layer 21 and a metal layer 22, and a casing 11, the dielectric layer 21, and the metal layer 22 constitute a capacitor 23. However, no capacitor 18 is included. The dielectric layer 21 was a PTFE layer having a thickness of 1 mm and formed in an inner surface of the casing 11. The metal layer 22 was a stainless-steel layer having a thickness of 1 mm and formed on the dielectric layer 21.

### (Evaluation of Durability Performance)

By the same method as that of the Example 1, durability performance of the vibration sensor unit 500 according to the Example 5 was evaluated. Fig. 14 illustrates a result.

As illustrated in Fig. 14, the durability performance of the vibration sensor unit 500 of the Example 5 was higher by 100 times than that of the vibration sensor unit 1000 of the Comparative Example. Thus, according to the Example 5, the durability performance of the vibration sensor unit 500 was improved greatly compared with that of the Comparative Example.

Power consumed for preventing corrosion of the vibration sensor unit 500 of the Example 5 was 0 mW. This showed that the power generated by the vibration sensor 12 was enough to operate the vibration sensor unit 500.

In the Example 5, the PTFE layer having the thickness of 1 mm was used as the dielectric layer 21, and the stainless-steel layer having the thickness of 1 mm was used as the metal layer 22. However, the thicknesses and the materials of the dielectric layer 21 and the metal layer 22 in the Example 5 are not limited to these examples.

This application claims priority from Japanese Patent Application No. 2012-215130 filed on September 27, 2012, which is hereby incorporated by reference herein in its entirety.

## Claims

1. A vibration sensor unit comprising:
a metal casing;
a vibration sensor disposed in the casing;
a battery; and
a control unit,
wherein the control unit applies power supplied from the battery to the casing to apply charges to the casing, and controls an amount of power applied to the casing.

2. The vibration sensor unit according to Claim 1, wherein the control unit intermittently applies the charges to the casing.

3. The vibration sensor unit according to Claim 2, wherein the control unit applies the charges to the casing at regular time intervals.

4. The vibration sensor unit according to Claim 2, further comprising a potential detection unit configured to detect a potential of the casing,
wherein the control unit applies, according to a detection result by the potential detection unit, the charges to the casing so that the potential of the casing can be maintained within a fixed range.

5. The vibration sensor unit according to any one of Claims 1 to 4, further comprising a power generator configured to convert vibration into power,
wherein the control unit uses the power generated by the power generator for applying the charges to the casing or operating the control unit.

6. The vibration sensor unit according to Claim 5, wherein the vibration sensor also functions as the power generator.

7. The vibration sensor unit according to Claim 6, further comprising:
a power storage unit configured to store an output of the vibration sensor as power; and
a change-over switch configured to perform switching between a state of inputting the output of the vibration sensor to the control unit and a state of inputting the output of the vibration sensor to the power storage unit.

8. The vibration sensor unit according to Claim 5 or 6, further comprising a power storage unit configured to store the power generated by the power generator,
wherein the power generated by the power generator is supplied to the control unit via the power storage unit.

9. The vibration sensor unit according to any one of Claims 5 to 8, further comprising a power storage unit configured to store the power generated by the power generator,
wherein the power stored in the power storage unit is charged to the battery.

10. The vibration sensor unit according to any one of Claims 7 to 9, wherein the power storage unit includes a capacitor.

11. The vibration sensor unit according to Claim 10, wherein the capacitor includes:
the casing;
a dielectric member formed in an inner or outer surface of the casing; and
a metallic material formed on the dielectric member.

12. The vibration sensor unit according to any one of Claims 1 to 11, further comprising an insulator configured to cover an outer surface of the casing.
